# FASCICULE DE BREVET EUROPEEN

(11) **EP 3 921 999 B1**
(45) Date de publication et mention de la délivrance du brevet: **01.11.2023**
(21) Numéro de dépôt: 20709272.7
(22) Date de dépôt: 04.02.2020
(51) Int. Cl.: H04L 67/12, H04W 4/38, H04Q 9/00

(54) **CONCENTRATEUR BASSE CONSOMMATION ET DETECTEUR CONFIGURE POUR COMMUNIQUER AVEC CE CONCENTRATEUR**
NIEDRIGER VERBRAUCHSHUB UND DETEKTOR, DER FÜR DIE KOMMUNIKATION MIT DIESEM NUB KONFIGURIERT IST
LOW CONSUMPTION HUB AND DETECTOR CONFIGURED TO COMMUNICATE WITH THIS HUB

(30) Priorité: 05.02.2019 FR 1901119
(43) Date de publication de la demande: 15.12.2021
(73) Titulaire: ENGIE, 92400 Courbevoie (FR)
(72) Inventeur: WERLY, Julien, 95120 Ermont (FR); D'AGOSTINO, Angélique, 94490 Ormesson Sur Marne (FR); RUPIN, Fabian, 75014 Paris (FR)
(74) Mandataire: Cabinet Beau de Loménie
(86) Numéro de dépôt international: PCT/FR2020/050182
(87) Numéro de publication internationale: WO 2020/161430

(56) Documents cités:
- WO-A1-2018/073785
- FR-A1- 2 812 084
- US-A1- 2017 281 000
- US-A1- 2019 014 291

## Description

### Domaine Technique

L'invention se rapporte au domaine général de la collecte ou remontée, dans un réseau, d'informations acquises par des capteurs et via un concentrateur.

L'invention s'applique de façon privilégiée mais non limitative dans un environnement dans lequel les réseaux électriques sont rares ou de mauvaise qualité voire inexistants. Dans un tel environnement, il est naturel de chercher à utiliser un concentrateur autonome en énergie et à basse consommation. Il est généralement admis que la consommation d'un tel concentrateur devrait être inférieure à 5000 Wh/an et que le volume de sa source d'énergie devrait être inférieur à 2 litres, pour de simples questions de logistique.

Dans l'état actuel de la technique, les concentrateurs reçoivent les signaux émis par les capteurs par des moyens de communication radiofréquence. Ces moyens de communication sont actifs en permanence pour pouvoir recevoir les signaux des capteurs.

Le document FR 2812084 A1 concerne un système qui comprend un concentrateur capable de communiquer directement avec un pluralité de capteurs.

Malheureusement, ce type d'écoute consomme beaucoup d'énergie. Pour un ordre d'idée, on peut considérer que la puissance moyenne de ces concentrateurs est comprise entre 1W et 2W et que leur consommation annuelle est comprise entre 8760 Wh et 17520 Wh. En prenant en compte un coefficient de sécurité de 1,4, la quantité nécessaire d'énergie à prévoir est comprise entre 12.000 Wh et 24.500 Wh par an.

II a été envisagé d'alimenter un tel concentrateur soit avec un pack de piles soit avec des panneaux solaires (ou tout autre source d'énergie renouvelable) associés à une batterie.

Malheureusement, ces solutions sont onéreuses et ne permettent pas de répondre aux caractéristiques souhaitées (encombrement inférieur à 2 litres, consommation inférieure à 5000 Wh/an).

L'invention vise un concentrateur qui ne présente pas ces inconvénients et un détecteur comportant un capteur apte à remonter des données vers un tel concentrateur.

### Exposé de l'invention

Plus précisément, et selon un premier aspect, l'invention concerne un détecteur comportant :
- un capteur configuré pour acquérir une caractéristique de l'environnement dudit capteur ;
- un module configuré pour réaliser un appairage du détecteur avec un concentrateur, et pour recevoir, pendant cet appairage, un identifiant unique du détecteur;
- une mémoire pour stocker cet identifiant unique et un programme d'ordinateur ;
- un module de synchronisation d'une horloge du détecteur avec une horloge du concentrateur ;
- un module de communication radio contrôlé par l'horloge du détecteur ;
- un module de calcul configuré pour déterminer, à partir de l'identifiant unique du détecteur, et en exécutant le programme d'ordinateur, au moins une plage d'émission d'une donnée de collecte obtenue à partir de la caractéristique de l'environnement acquise par le capteur ;
- le module de communication radio étant configuré pour envoyer la donnée de collecte au concentrateur pendant la plage d'émission.

Selon un deuxième aspect, l'invention concerne un concentrateur comportant :
- un module configuré pour réaliser un appairage du concentrateur avec au moins un détecteur et pour envoyer à ce détecteur, pendant l'appairage, un identifiant unique propre au détecteur ;
- une mémoire pour stocker cet identifiant unique et un programme d'ordinateur ;
- un module de synchronisation d'une horloge du concentrateur avec une horloge du détecteur ;
- un module de communication radio contrôlé par l'horloge du concentrateur ;
- un module de calcul configuré pour déterminer, pour chacun des détecteurs, à partir de l'identifiant unique propre au détecteur, et en exécutant le programme d'ordinateur, au moins une plage de réception d'une donnée de collecte envoyée par le détecteur ;
- un module de contrôle configuré pour activer le module de communication radio dans les plages de réception, pour recevoir des données de collecte émises par au moins un détecteur et pour désactiver le module de communication radio, au moins en réception, en dehors de ces plages ; et
- un module de communication configuré pour transférer les données de collecte à au moins un équipement distant.

L'invention vise enfin un système comportant un concentrateur et au moins un détecteur tels que mentionnés précédemment dans lequel, chaque plage d'émission déterminée par un détecteur est égale ou comprise dans une plage de réception déterminée par le concentrateur.

Ainsi, et d'une façon générale, l'invention propose de diminuer les plages d'écoute du concentrateur en vue de diminuer sa consommation d'énergie, en synchronisant les plages de réception du concentrateur avec les plages d'émission des détecteurs.

L'invention permet ainsi de faire remonter dans le réseau des données représentatives de l'environnement du capteur, par exemple une concentration de dihydrogène dans le fluide environnant, en réduisant au maximum l'énergie du concentrateur requise pour faire fonctionner ses moyens de communication radio.

Il est essentiel que le concentrateur soit synchronisé avec chacun des détecteurs.

Dans un mode de réalisation, le module de synchronisation du concentrateur et le module de synchronisation de chacun des détecteurs se synchronisent indépendamment les uns des autres sur un dispositif tiers.

Dans un autre mode de réalisation, le module de communication radio d'au moins un détecteur est configuré pour recevoir un message de synchronisation émis par le concentrateur, l'horloge du détecteur étant synchronisée par le module de synchronisation du détecteur à partir de ce message de synchronisation.

Dans ce mode de réalisation, le concentrateur est caractérisé en ce que son module de communication radio est configuré pour envoyer un message de synchronisation à au moins un détecteur, pour que celui-ci synchronise son horloge avec l'horloge du concentrateur.

Ce message de synchronisation peut être envoyé à un détecteur par le concentrateur en réponse à la réception de données de collecte envoyées par ce détecteur. Ce mode de réalisation permet de maintenir une bonne synchronisation entre les équipements.

Dans un mode de réalisation, les moyens de communication radio des détecteurs et du concentrateur sont configurés pour communiquer dans une même bande de fréquences unique. Dans ce mode de réalisation, le concentrateur ne peut écouter qu'un détecteur à un instant donné. Les plages d'émission et de réception déterminées pour un détecteur ne recouvrent pas, même partiellement les plages d'émission et de réception déterminées pour un autre détecteur.

Dans un autre mode de réalisation, les moyens de communication radio du concentrateur sont configurés dans au moins deux bandes de fréquences, de sorte que le concentrateur peut écouter au moins deux détecteurs en même temps si ceux-ci émettent dans deux bandes de fréquence différentes. Dans ce mode de réalisation, au moins une plage d'émission déterminée pour une première bande de fréquences peut recouvrir une plage d'émission déterminée pour une deuxième bande de fréquences différente de la première bande de fréquence. En pratique, les moyens de communication radio du concentrateur peuvent opérer sur huit bandes de fréquences, chacun des détecteurs étant configuré pour pouvoir communiquer sur une de ces bandes. Un concentrateur à plus de huit bandes de fréquences peut être utilisé dans l'invention mais son électronique est alors plus complexe. Dans un mode de réalisation, les modules de communication radio du concentrateur et des détecteurs sont compatibles et opèrent dans un réseau LPWAN par exemple en utilisant le protocole LoRaWAN standardisé par la LoRa Alliance.

Pour plus de renseignements sur ce protocole, l'homme du métier peut se référer au document LoRaWAN^{™} 1.1 Spécification.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente un système conforme à l'invention ;
[Fig. 2] la figure 2 représente un procédé de collecte mis en oeuvre par un détecteur et par un concentrateur conformes à un mode particulier de réalisation de l'invention.

### Description des modes de réalisation

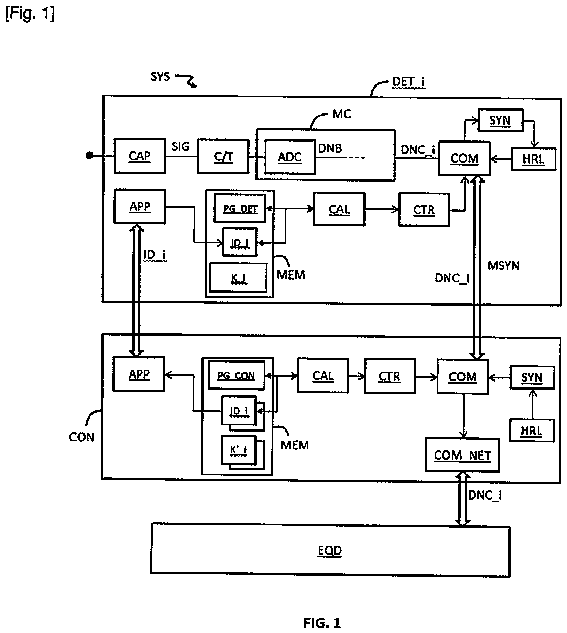

La figure 1 représente un système SYS conforme à l'invention. Ce système comporte un concentrateur CON conforme à l'invention et une pluralité de détecteurs conformes à l'invention, dont un seul DET_i est représenté. On supposera dans cet exemple que le système comporte M détecteurs DET_0, ...DET_M-1

Dans le mode de réalisation décrit ici, chaque détecteur DET_i comporte :
- une horloge HRL et un module SYN de synchronisation configuré pour synchroniser cette horloge à partir de messages MSYN de synchronisation reçus du concentrateur CON;
- un module APP d'appairage du détecteur DET avec le concentrateur CON, ce module étant configuré pour recevoir durant cet appairage, via une transmission radiofréquence, un identifiant ID_i du détecteur ;
- une mémoire MEM configurée pour mémoriser l'identifiant ID_i du détecteur, un programme informatique PG_DET et des clés cryptographiques K_i propres au détecteur et utilisées pour l'appairage avec le concentrateur ;
- un capteur CAP configuré pour générer un signal électrique SIG représentatif d'une caractéristique de l'environnement du capteur CAP. Dans le mode de réalisation décrit ici, cette caractéristique est une concentration d'hydrogène et le signal SIG représente la concentration d'hydrogène dans l'environnement du capteur ;
- un convertisseur courant/tension C/T configuré pour convertir le signal SIG en tension ;
- un microcontrôleur MC comportant un convertisseur analogique numérique ADC configuré pour convertir la tension en sortie du convertisseur courant/tension C/T en une donnée numérique brute DNB et à envoyer à un module COM de communication radio contrôlé par l'horloge HRL, une donnée numérique de collecte DNC_i obtenue à partir de cette donnée numérique brute DNB;
- un module de calcul CAL configuré pour déterminer à partir de l'identifiant ID_i de ce détecteur, en exécutant ledit programme d'ordinateur PG_DET, au moins une plage d'émission de la donnée numérique de collecte DNC_i;
- un module de contrôle CTR configuré pour activer le module COM de communication radio dans la ou les plages d'émission déterminées pour envoyer les données de collecte DNC_i au concentrateur CON et pour désactiver ce module COM de communication, au moins en émission, en dehors de ces plages ; et
ledit module COM de communication radio, celui-ci étant configuré pour envoyer la donnée numérique de collecte DNCJ au concentrateur CON et pour recevoir des messages de synchronisation MSYN du concentrateur CON.

Dans le mode de réalisation décrit ici, la donnée numérique de collecte DNC_i envoyée au concentrateur CON est la donnée numérique brute DNB obtenue par conversion du signal proportionnel à la caractéristique de l'environnement du capteur.

Dans le mode de réalisation décrit ici, le concentrateur CON comporte :
- une horloge HRL et un module SYN de synchronisation configuré pour générer des messages MSYN de synchronisation à partir de cette horloge HRL
- un module APP d'appairage du concentrateur CON avec chaque détecteur DET J, ce module étant configuré pour envoyer à un détecteur DET_i, durant l'appairage avec ce détecteur DET_i, via une transmission radiofréquence, un identifiant ID_i de ce détecteur DET_i;
- une mémoire MEM configurée pour mémoriser les identifiants ID_i de tous les détecteurs DET_i, un programme informatique PG_CON, et des clés cryptographiques K'_i utilisées pour l'appairage avec les détecteurs DET_i ;
- un module COM de communication radio contrôlé par l'horloge HRL, compatible avec le module COM de communication radio de chacun des détecteurs DET_i, et configuré pour envoyer les messages de synchronisation MSYN à chacun des détecteurs DET_i;
- un module de calcul CAL configuré pour déterminer, pour chaque détecteur DET_i, à partir de l'identifiant ID_i de ce détecteur, en exécutant ledit programme d'ordinateur PG_CON, une plage de réception par donnée numérique de collecte DNC_i émise par le détecteur DET_i;
- un module de contrôle CTR configuré pour activer le module COM de communication radio dans lesdites plages déterminées pour recevoir les données de collecte DNC_i émises par les détecteurs DET_i et pour désactiver ce module COM de communication, au moins en réception, en dehors de ces plages ; et
- un module de communication COM_NET configuré pour transférer lesdites données de collecte DNC_i à au moins un équipement distant EQD.

Dans un mode de réalisation, le module de communication COM_NET peut être configuré pour retransmettre directement les données de collecte DNC_i lorsqu'elles sont reçues par le module de communication radio COM.

Dans un autre mode de réalisation, le module de communication COM_NET peut être configuré pour retransmettre les données de collecte DNC_i de façon décorrélée de leur réception, par exemple à une heure déterminée, ou par exemple en réponse à une requête en ce sens de l'équipement distant EQD.

Dans le mode de réalisation décrit ici, les modules COM de communication radio des détecteurs DET_i et du concentrateur CON sont conformes au protocole LoRaWAN.

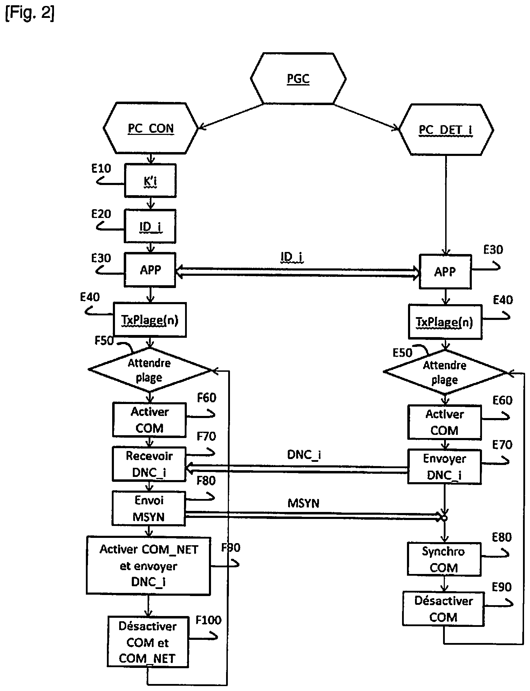

La figure 2 représente un procédé général de collecte PGC mis en oeuvre par un détecteur et par un concentrateur conformes à un mode particulier de réalisation de l'invention. Ce procédé général de collecte comporte un procédé de collecte PC_DET_i mis en oeuvre par chacun des détecteurs DET_i et un procédé de collecte PC_CON mis en oeuvre par le concentrateur CON.

Dans le mode de réalisation décrit ici, au cours d'une étape de configuration E10, l'opérateur enregistre, dans la mémoire MEM du concentrateur, les clés cryptographiques K'_i pour chacun des détecteurs.

Dans le mode de réalisation décrit ici, au cours d'une étape E20, le concentrateur CON associe un identifiant unique ID_i à chaque détecteur DET_i. Il mémorise ces identifiants ID_i dans sa mémoire MEM. Cette étape E20 peut être effectuée dès que l'opérateur enregistre les clés cryptographiques K'_i d'un détecteur DET_i.

Dans le mode de réalisation décrit ci-après, on supposera que ID_i = i.

Pour appairer un détecteur DET_i sur le concentrateur CON, ce détecteur DET_i et le concentrateur CON mettent en oeuvre une étape E30 d'appairage. Cette étape connue de l'homme du métier des réseaux IoT (en anglais « Internet of Things ») sous le nom de OTAA (en anglais « Over The Air Activation ») utilise les clés cryptographiques K_i et K'_i. Au cours de cette étape E30, le concentrateur CON transmet, via une transmission radiofréquence, l'identifiant unique ID_i au détecteur DET_i. Le détecteur DET_i enregistre son identifiant unique ID_i dans sa mémoire MEM.

Conformément à l'invention, chaque détecteur DET_i comporte dans sa mémoire MEM un programme informatique PG_DET et le concentrateur CON comporte dans sa mémoire MEM un programme informatique PG_CON.

Ces programmes peuvent être identiques.

En tout état de cause, le programme PG_DET mis en oeuvre par un détecteur DET_i et le programme PG_CON mis en oeuvre par le concentrateur CON doivent permettre à ce détecteur DET_i et au concentrateur CON de calculer indépendamment l'un de l'autre, au cours d'une étape E40, une plage de temps.

La plage de temps calculée par le détecteur DET_i est destinée à être utilisée par le détecteur DET_i pour envoyer une donnée numérique de collecte DNC_i au concentrateur CON.

De son côté, le concentrateur COM est configuré pour activer ses moyens de communication COM pendant la plage de temps qu'il a lui-même calculée pour recevoir la donnée numérique de collecte DNC_i émise par le détecteur DET_i.

Par conséquent, la plage de temps calculée par le détecteur DET_i doit être comprise dans la plage de temps calculée par le concentrateur CON. Dans le mode de réalisation décrit ici, ces plages de temps sont identiques.

Dans le mode de réalisation décrit ici, au cours de l'étape E40, le détecteur DET_i, d'identifiant ID_i, d'une part, et le concentrateur CON d'autre part, calculent les instants de départ, exprimés en secondes à partir de 0H, des plages d'émission du détecteur DET_i en utilisant la formule suivante :
TxPlage(n) = (86 400 / Nb_Trans)* (n + (ID_i / NMaxDet)), dans laquelle :
- NMaxDet est le nombre M maximum de détecteurs possibles dans le système ;
- NB_Trans est le nombre de transmissions souhaitées par jour pour le détecteur Det_i ;
- n est le numéro de transmission, compris entre 0 et NB_Trans -1 ;
- ID_i est l'identifiant unique du détecteur DET_i, compris entre 0 et M-1 ;

Par conséquent, en supposant que :
- NMaxDet (nombre maximum de détecteurs possibles dans le système) = 4 ; et que
- Nb_Trans (nombre de transmissions souhaitées par jour par détecteur) = 3, le tableau ci-après résume les instants de début d'émission de chacun des détecteurs DET_0 à DET_3 d'identifiant ID_i de 0 à 3 ;

**[tableaux 1]**

| Détecteur | Id_i | Plage | TxPlage(n) = (86 400 / 3)* (n + (ID_i / 4}) |
|---|---|---|---|
| Id_0 | 0 | n=0 | 0s = 0 H |
| Id_0 | 0 | n=1 | 28800s = 8 H |
| Id_0 | 0 | n=2 | 57600s = 16 H |
| Id_1 | 1 | n=0 | 7200s =2 H |
| Id_1 | 1 | n=1 | 36000s =10 H |
| Id_1 | 1 | n=2 | 64800s = 18 H |
| Id_2 | 2 | n=0 | 14400s = 4 H |
| Id_2 | 2 | n=1 | 43200s = 12 H |
| Id_2 | 2 | n=2 | 72000s = 20 H |
| Id_3 | 3 | n=0 | 21600s = 6 H |
| Id_3 | 3 | n=1 | 50400s = 14 H |
| Id_3 | 3 | n=2 | 79200s = 22 H |

Les plages ont au moins une durée de plusieurs secondes. Dans le mode de réalisation décrit ici, les plages ont toutes la même durée, par exemple 10 s.

A titre d'exemple, le détecteur DET_2 détermine qu'il peut émettre des données numériques de collecte DNC dans les plages [4H00-4H05], [12H00-12H05], [20H00-20H05].

De façon similaire, le concentrateur CON détermine qu'il doit :
- activer ses moyens de communication dans la plage [0H00-0H05] pour recevoir une données numérique de collecte DNC_0 émise par le détecteur DET_0 ;
- activer ses moyens de communication dans la plage [2H00-2H05] pour recevoir une données numérique de collecte DNC_1 émise par le détecteur DET_1 ;
- activer ses moyens de communication dans la plage [4H00-4H05] pour recevoir une données numérique de collecte DNC_2 émise par le détecteur DET_2 ;
- activer ses moyens de communication dans la plage [6H00-6H05] pour recevoir une données numérique de collecte DNC_3 émise par le détecteur DET_3 ;
- activer ses moyens de communication dans la plage [SH00-8H05] pour recevoir une données numérique de collecte DNC_0 émise par le détecteur DET_0 ;
- activer ses moyens de communication dans la plage [10H00-10H05] pour recevoir une données numérique de collecte DNC_1 émise par le détecteur DET_1 ;
- activer ses moyens de communication dans la plage [12H00-12H05] pour recevoir une données numérique de collecte DNC_2 émise par le détecteur DET_2 ;
- activer ses moyens de communication dans la plage [14H00-14H05] pour recevoir une données numérique de collecte DNC_3 émise par le détecteur DET_3 ;
- activer ses moyens de communication dans la plage [16H00-16H05] pour recevoir une données numérique de collecte DNC_0 émise par le détecteur DET_0;
- activer ses moyens de communication dans la plage [18H00-18H05] pour recevoir une données numérique de collecte DNC_1 émise par le détecteur DET_1 ;
- activer ses moyens de communication dans la plage [20H00-20H05] pour recevoir une données numérique de collecte DNC_2 émise par le détecteur DET_2 ;
- activer ses moyens de communication dans la plage [22H00-22H05] pour recevoir une données numérique de collecte DNC_3 émise par le détecteur DET_3 ; et
- désactiver ses moyens de communication COM en dehors de ces plages de temps.

Dans un mode de réalisation de l'invention, le nombre maximum NMaxDet de détecteurs possibles dans le système est 150. Ce nombre permet avantageusement au concentrateur d'écouter un nombre important de détecteurs tout en gardant une consommation relativement réduite.

Au cours d'une étape E50 (respectivement F50), le détecteur DET_i (respectivement le concentrateur CON) attend le début de la prochaine plage qu'il a calculée à l'étape E40.

Au cours d'une étape E60 (respectivement F60), juste avant le début de la plage, le détecteur DET_i (respectivement le concentrateur CON) active ses moyens de communications COM.

Le détecteur DET_i obtient une donnée numérique de collecte DNC_i à partir des informations mesurées par le capteur dans son environnement et envoie cette donnée DNC_i au concentrateur au cours d'une étape E70. Le concentrateur CON reçoit cette donnée DNC_i au cours d'une étape F70.

Dans le mode de réalisation décrit ici, le concentrateur répond à ce message en envoyant (étape F80) un message de synchronisation au détecteur DET_i pour que celui-ci puisse resynchroniser (ou corriger la dérive temporelle) ses moyens de communication avec ceux du concentrateur CON (étape E80). En pratique, les horloges des détecteurs DET_i ont une dérive faible entre 2 plages de synchronisation.

Le détecteur DET_i désactive ses moyens de communication COM (étape E90) et attend la prochaine plage par retour à l'étape E50.

Au cours d'une étape F90, le concentrateur CON active son module de communication COM_NET et envoie la donnée numérique collectée DNC_i reçue du détecteur DET_i à l'équipement distant EQD.

Au cours d'une étape F100, le concentrateur CON désactive ses moyens de communication COM et COM_NET et attend la prochaine plage par retour à l'étape F50.

## Revendications

1. Détecteur (DET_i) comportant :
- un capteur (CAP) configuré pour acquérir une caractéristique de l'environnement dudit capteur ;
- un module (APP) configuré pour réaliser (E30) un appairage dudit détecteur (DET_1) avec un concentrateur (CON), et pour recevoir, pendant ledit appairage, un identifiant unique (ID_i) dudit détecteur (DET_i);
- une mémoire (MEM) pour stocker ledit identifiant unique (ID_i) et un programme d'ordinateur (PG_DET) ;
- un module (SYN) de synchronisation d'une horloge (HRL) dudit détecteur (DET_i) avec une horloge (HRL) dudit concentrateur (CON) ;
- un module (COM) de communication radio contrôlé par l'horloge (HRL) du détecteur (DET_i) ;
- un module (CAL) de calcul configuré pour déterminer (E40), à partir dudit identifiant unique (ID_i), et en exécutant ledit programme d'ordinateur (PG_DET), au moins une plage d'émission d'une donnée de collecte (DNC_i) obtenue à partir de la caractéristique de l'environnement acquise par le capteur (CAP) ;
- ledit module (COM) de communication radio étant configuré pour envoyer (E70) ladite donnée de collecte (DNC_i) audit concentrateur (CON) pendant ladite plage d'émission.

2. Détecteur (DET_i) selon la revendication 1, **caractérisé en ce que** ledit module (COM) de communication radio est configuré pour recevoir un message (MSYN) de synchronisation émis par ledit concentrateur (CON), ladite horloge (HRL) du détecteur (DET_i) étant synchronisée par ledit module de synchronisation (SYN) à partir dudit message de synchronisation.

3. Détecteur (DET_i) selon la revendication 2, **caractérisé en ce que** ledit module (COM) de communication radio est configuré pour recevoir (E80) ledit message de synchronisation (MSYN) en réponse audit envoi de la donnée de collecte (DNC_i).

4. Détecteur (DET_i) selon l'une quelconque des revendications 1 à 3 dans lequel ladite caractéristique est une mesure d'une caractéristique dans un fluide environnant ledit capteur, par exemple une concentration de dihydrogène dans ledit fluide.

5. Concentrateur (CON) comportant :
- un module (APP) configuré pour réaliser un appairage dudit concentrateur (CON) avec au moins un détecteur (DET_i) et pour envoyer audit au moins un détecteur, pendant ledit appairage, un identifiant unique (ID_i) propre audit détecteur (DET_i);
- une mémoire (MEM) pour stocker ledit identifiant unique (ID_i) et un programme d'ordinateur (PG_CON) ;
- un module (SYN) de synchronisation d'une horloge (HRL) dudit concentrateur (CON) avec une horloge (HRL) dudit au moins un détecteur (DET_i) ;
- un module (COM) de communication radio contrôlé par ladite horloge (HRL) du concentrateur (CON) ;
- un module (CAL) de calcul configuré pour déterminer (E40), pour chacun desdits détecteurs (DET_i), à partir dudit identifiant unique (ID_i) propre audit détecteur (DET_i), et en exécutant ledit programme d'ordinateur (PG_CON), au moins une plage de réception d'une donnée de collecte (DNC_i) envoyée par ledit détecteur (DET_i);
- un module (CTR) de contrôle configuré pour activer (F60) ledit module de communication radio (COM) dans lesdites plages de réception pour recevoir (F70) des données de collecte (DNC_i) émises par ledit au moins un détecteur (DNC_i) et pour désactiver (F100) ledit module de communication radio (COM), au moins en réception, en dehors de ces plages ;
- un module (COM_NET) de communication configuré pour transférer lesdites données de collecte (DNC_i) à au moins un équipement distant (EQD).

6. Concentrateur (CON) selon la revendication 5, **caractérisé en ce que** ledit module de communication (COM) radio est configuré pour envoyer (F80) un message (MSYN) de synchronisation audit au moins un détecteur (DET_i), pour que ledit au moins un détecteur (DET_i) synchronise son horloge (HRL) avec l'horloge (HRL) dudit concentrateur (CON).

7. Système comportant au moins un détecteur (DET_i) selon l'une quelconque des revendications 1 à 4 et un concentrateur (CON) selon l'une quelconque des revendications 5 à 6, chaque plage d'émission déterminée par un dit détecteur étant comprise dans une et une seule plage de réception déterminée par ledit concentrateur.

8. Système selon la revendication 7 dans lequel chaque plage d'émission déterminée par un dit détecteur est égale à une et une seule plage de réception déterminée par ledit concentrateur.

9. Système selon la revendication 7 ou 8 dans lequel lesdits moyens (COM) de communication radio dudit au moins un détecteur (DET_i) et dudit concentrateur (CON) sont configurés pour communiquer dans une même bande de fréquences unique, les plages d'émission et de réception déterminées pour un même détecteur ne recouvrant pas, même partiellement les plages d'émission et de réception déterminées pour un autre détecteur.

10. Système selon l'une quelconque des revendications 7 à 9 dans lequel lesdits moyens (COM) de communication radio dudit au moins un détecteur (DET_i) et dudit concentrateur (CON) sont configurés pour communiquer dans au moins deux bandes de fréquences, et dans lequel au moins une plage d'émission déterminée pour une première bande de fréquences recouvre une plage d'émission déterminée pour une deuxième bande de fréquences différente de la première bande de fréquence.

11. Système selon l'une quelconque des revendications 7 à 10 dans lequel lesdits modules (COM) de communication radio du concentrateur (CON) et dudit au moins un détecteur (DET_i) sont compatibles et opèrent dans un réseau LPWAN par exemple en utilisant le protocole LoRaWAN.

## Patentansprüche

1. Detektor (DET_i), der beinhaltet:
- einen Sensor (CAP), der dazu ausgestaltet ist, eine Eigenschaft einer Umgebung des Sensors zu erfassen,
- ein Modul (APP), das dazu ausgestaltet ist, eine Paarung des Detektors (DET_i) mit einem Konzentrator (CON) durchzuführen (E30) und während der Paarung einen eindeutigen Identifikator (ID_i) des Detektors (DET_i) zu empfangen,
- einen Speicher (MEM) zum Speichern des eindeutigen Identifikators (ID_i) und eines Computerprogramms (PG_DET),
- ein Modul (SYN) zur Synchronisation eines Zeitgebers (HRL) des Detektors (DET_i) mit einem Zeitgeber (HRL) des Konzentrators (CON),
- ein Modul (COM) zur Funkkommunikation, das durch den Zeitgeber (HRL) des Detektors (DET_i) gesteuert wird,
- ein Berechnungsmodul (CAL), das dazu ausgestaltet ist, ausgehend von dem eindeutigen Identifikator (ID_i) und durch Ausführen des Computerprogramms (PG_DET) zumindest einen Sendungsbereich von Sammeldaten (DNC_i), die ausgehend von der Eigenschaft der Umgebung erhalten werden, die von dem Sensor (CAP) erfasst wird, zu bestimmen (E40),
- wobei das Modul (COM) zur Funkkommunikation dazu ausgestaltet ist, die Sammeldaten (DNC_i) während des Sendungsbereichs an den Konzentrator (CON) zu senden (E70).

2. Detektor (DET _i) nach Anspruch 1, **dadurch gekennzeichnet, dass** das Modul (COM) zur Funkkommunikation dazu ausgestaltet ist, eine Synchronisations-Nachricht (MSYN) zu empfangen, die von dem Konzentrator (CON) gesendet wird, wobei der Zeitgeber (HRL) des Detektors (DET_i) durch das Modul zur Synchronisation (SYN) ausgehend von der Synchronisations-Nachricht synchronisiert wird.

3. Detektor (DET _i) nach Anspruch 2, **dadurch gekennzeichnet, dass** das Modul (COM) zur Funkkommunikation dazu ausgestaltet ist, die Synchronisations-Nachricht (MSYN) in Antwort auf die Sendung der Sammeldaten (DNC_i) zu empfangen (E80).

4. Detektor (DET _i) nach einem der Ansprüche 1 bis 3, wobei die Eigenschaft eine Messung einer Eigenschaft in einem Fluid ist, welches den Sensor umgibt, zum Beispiel eine Dihydrogen-Konzentration in dem Fluid.

5. Konzentrator (CON), der beinhaltet:
- ein Modul (APP), das dazu ausgestaltet ist, eine Paarung des Konzentrators (CON) mit zumindest einem Detektor (DET _i) durchzuführen und während der Paarunc einen eindeutigen Identifikator (ID_i), der dem Detektor (DET_i) eigen ist, an den zumindest einen Detektor zu senden,
- einen Speicher (MEM) zum Speichern des eindeutigen Identifikators (ID_i) und eines Computerprogramms (PG_CON),
- ein Modul (SYN) zur Synchronisation eines Zeitgebers (HRL) des Konzentrators (CON) mit einem Zeitgeber (HRL) des zumindest einen Detektors (DET_i),
- ein Modul (COM) zur Funkkommunikation, das von dem Zeitgeber (HRL) des Konzentrators (CON) gesteuert wird,
- ein Berechnungsmodul (CAL), das dazu ausgestaltet ist, für jeden der Detektoren (DET_i) ausgehend von dem eindeutigen Identifikator (ID_i), der dem Detektor (DET_i) eigen ist, und durch Ausführen des Computerprogramms (PG_CON), zumindest einen Empfangsbereich von Sammeldaten (DNC_i) zu bestimmen (E40), die von dem Detektor (DET_i) gesendet werden,
- ein Steuermodul (CTR), das dazu ausgestaltet ist, das Modul (COM) zur Funkkommunikation in den Empfangsbereichen zu aktivieren (F60), um Sammeldaten (DNC_i) zu empfangen (F70), die von dem zumindest einen Detektor (DNC_i) gesendet werden, und das Modul (COM) zur Funkkommunikation außerhalb dieser Bereiche zumindest während des Empfangs zu deaktivieren (F100),
- ein Modul (COM_NET) zur Kommunikation, das dazu ausgestaltet ist, die Sammeldaten (DNC_i) an zumindest eine entfernte Einrichtung (EQD) zu übertragen.

6. Konzentrator (CON) nach Anspruch 5, **dadurch gekennzeichnet, dass** das Modul (COM) zur Funkkommunikation dazu ausgestaltet ist, eine Synchronisations-Nachricht (MSYN) an den zumindest einen Detektor (DET_i) zu senden (F80), damit der zumindest eine Detektor (DET_i) seinen Zeitgeber (HRL) mit dem Zeitgeber (HRL) des Konzentrators (CON) synchronisiert.

7. System, das zumindest einen Detektor (DET_i) nach einem der Ansprüche 1 bis 4 und einen Konzentrator (CON) nach einem der Ansprüche 5 bis 6 beinhaltet, wobei jeder Sendungsbereich, der von einem Detektor bestimmt wird, in einem einzigen Empfangsbereich enthalten ist, der von dem Konzentrator bestimmt wird.

8. System nach Anspruch 7, wobei jeder Sendungsbereich, der von einem Detektor bestimmt wird, derselbe ist wie ein einziger Empfangsbereich, der von dem Konzentrator bestimmt wird.

9. System nach Anspruch 7 oder 8, wobei die Mittel (COM) zur Funkkommunikation des zumindest einen Detektors (DET_i) und des Konzentrators (CON) dazu ausgestaltet sind, in einem selben einzigen Frequenzband zu kommunizieren, wobei die Sendungs- und Empfangsbereiche, die für einen selben Detektor bestimmt werden, die Sendungs- und Empfangsbereiche, die für einen anderen Detektor bestimmt werden, nicht und auch nicht teilweise überlappen.

10. System nach einem der Ansprüche 7 bis 9, wobei die Mittel (COM) zur Funkkommunikation des zumindest einen Detektors (DET_i) und des Konzentrators (CON) dazu ausgestaltet sind, in zumindest zwei Frequenzbändern zu kommunizieren, und wobei zumindest ein Sendungsbereich, der für ein erstes Frequenzband bestimmt wurde, einen Sendungsbereich, der für ein zweites Frequenzband bestimmt wurde, das sich von dem ersten Frequenzband unterscheidet, überlappt.

11. System nach einem der Ansprüche 7 bis 10, wobei die Module (COM) zur Funkkommunikation des Konzentrators (CON) und des zumindest einen Detektors (DET_i) kompatibel sind und in einem Netzwerk LPWAN arbeiten, zum Beispiel unter Verwendung des Protokolls LoRaWAN.

## Claims

1. A detector (DET_i) including:
- a sensor (CAP) configured to acquire a characteristic of the environment of said sensor;
- a module (APP) configured to pair (E30) said detector (DET_i) with a concentrator (CON), and to receive, during said pairing, a unique identifier (ID_i) of said detector (DET _i);
- a memory (MEM) for storing said unique identifier (ID_i) and a computer program (PG_DET);
- a module (SYN) for synchronizing a clock (HRL) of said detector (DET_i) with a clock (HRL) of said concentrator (CON);
- a radio communication module (COM) controlled by the clock (HRL) of the detector (DET_i);
- a calculation module (CAL) configured to determine (E40), from said unique identifier (ID_i), and by executing said computer program (PG_DET), at least one emission range of a collection data (DNC_i) obtained from the characteristic of the environment acquired by the sensor (CAP);
- said radio communication module (COM) being configured to send (E70) said collection data (DNC_i) to said concentrator (CON) during said emission range.

2. The detector (DET_i) according to claim 1, **characterized in that** said radio communication module (COM) is configured to receive a synchronization message (MSYN) emitted by said concentrator (CON), said clock (HRL) of the detector (DET_i) being synchronized by said synchronization module (SYN) from said synchronization message.

3. The detector (DET_i) according to claim 2, **characterized in that** said radio communication module (COM) is configured to receive (E80) said synchronization message (MSYN) in response to said sending of the collection data (DNC_i).

4. The detector (DET_i) according to any one of claims 1 to 3, wherein said characteristic is a measurement of a characteristic in a fluid surrounding said sensor, for example a concentration of dihydrogen in said fluid.

5. A concentrator (CON) including:
- a module (APP) configured to pair said concentrator (CON) with at least one detector (DET_i) and to send to said at least one detector, during said pairing, a unique identifier (ID_i) specific to said detector (DET_i);
- a memory (MEM) for storing said unique identifier (ID_i) and a computer program (PG_CON);
- a module (SYN) for synchronizing a clock (HRL) of said concentrator (CON) with a clock (HRL) of said at least one detector (DET_i);
- a radio communication module (COM) controlled by said clock (HRL) of the concentrator (CON);
- a calculation module (CAL) configured to determine (E40), for each of said detectors (DET_i), from said unique identifier (ID_i) specific to said detector (DET_i), and by executing said computer program (PG_CON), at least one reception range of a collection data (DNC_i) sent by said detector (DET_i);
- a control module (CTR) configured to activate (F60) said radio communication module (COM) in said reception ranges to receive (F70) collection data (DNC_i) emitted by said at least one detector (DNC_i) and to deactivate (F100) said radio communication module (COM), at least in reception, outside these ranges;
- a communication module (COM_NET) configured to transfer said collection data (DNC_i) to at least one remote equipment (EQD).

6. The concentrator (CON) according to claim 5, **characterized in that** said radio communication module (COM) is configured to send (F80) a synchronization message (MSYN) to said at least one detector (DET_i), so that said at least one detector (DET_i) synchronizes its clock (HRL) with the clock (HRL) of said concentrator (CON).

7. A system including at least one detector (DET_i) according to any one of claims 1 to 4 and a concentrator (CON) according to any one of claims 5 to 6, each emission range determined by a said detector being comprised in one and only one reception range determined by said concentrator.

8. The system according to claim 7 wherein each emission range determined by a said detector is equal to one and only one reception range determined by said concentrator.

9. The system according to claim 7 or 8, wherein said radio communication means (COM) of said at least one detector (DET_i) and of said concentrator (CON) are configured to communicate in the same unique frequency band, the emission and reception ranges determined for the same detector not covering, even partially, the emission and reception ranges determined for another detector.

10. The system according to any one of claims 7 to 9 wherein said radio communication means (COM) of said at least one detector (DET_i) and of said concentrator (CON) are configured to communicate in at least two frequency bands, and wherein at least one emission range determined for a first frequency band covers an emission range determined for a second frequency band different from the first frequency band.

11. The system according to any one of claims 7 to 10 wherein said radio communication modules (COM) of the concentrator (CON) and of said at least one detector (DET_i) are compatible and operate in an LPWAN network, for example by using the LoRaWAN protocol.
